# EUROPEAN PATENT SPECIFICATION

(11) **EP 2 792 560 B1**
(45) Date of publication and mention of the grant of the patent: **20.03.2019**
(21) Application number: 13164200.1
(22) Date of filing: 17.04.2013
(51) Int. Cl.: B60T 17/22, A01M 7/00, B05B 7/00, B05B 9/04, B60S 5/00, B67D 7/00, F01M 11/04, F16N 37/00

(54) **A portable appliance**
Tragbares Gerät
Appareil portable

(43) Date of publication of application: 22.10.2014
(73) Proprietor: Stanley Works (Europe) GmbH, 8600 Dübendorf (CH)
(72) Inventor: Herisse, Jean Christophe, 91600 Savigny sur Orge (FR); Praudel, Philippe, 91160 Long Jumeau (FR)
(74) Representative: SBD IPAdmin

(56) References cited:
- EP-A2- 1 793 157
- GB-A- 1 590 687
- US-A- 4 109 831
- US-A- 5 716 007
- US-A1- 2007 175 539
- US-A1- 2008 061 166
- US-B1- 6 830 083

## Description

The present invention relates to a portable appliance. In particular, but not exclusively, the present invention relates to a portable appliance equipped with a pump and a fluid reservoir.

GB 1 590 687 A1 shows a portable brake or clutch bleeder, comprising a body for supporting the portable appliance;a handle for manipulation of the portable appliance;a pump with an inlet and an outlet;a fluid reservoir fluidly coupled to the inlet of the pump; and an electric motor for operating the pump to cause pumping of fluid from the inlet to the outlet when the motor is energized by an electrical power supply.

Document US 2008/061166 A1 shows (see fig. 2): A portable appliance (see abstract, fig. 2), being a sprayer, comprising: a body 12 for supporting the portable appliance; a handle 84 for manipulation of the portable appliance; a pump 14 with an inlet and an outlet; a fluid reservoir 12 fluidly coupled to the inlet of the pump; and an electric motor (see §0027) for operating the pump to cause pumping of fluid from the inlet to the outlet when the motor is energized by an electrical power supply, wherein the portable appliance comprises a bay 24b for receiving an electrical power source for electrical connection to the motor.

Pumps for delivering a fluid are commonly found in a workshop environment. Such pumps are used in all manner of applications like, for example, pressure-washing, tire inflation, brake bleeding or clutch bleeding and many other applications. In the case of a pressure-washing pump, a water source is needed and the pressure-washer can be connected to a domestic water tap because these are often available within the range of a regular hosepipe. A brake bleeding pump needs to be supplied by fresh brake fluid such as DOT3, DOT4 or DOT5 which is not normally available from a wall-mounted tap in a workshop. Typically, the brake bleeder has its own brake fluid reservoir connected to the pump.

Pumps for delivering a fluid used in a workshop environment normally either need to be portable or need to be equipped with very long hoses so that they can be used for different applications in different locations. Long hoses clutter a workshop environment. It is preferable to have a portable appliance with its own fluid reservoir even though this may add weight, especially when the fluid reservoir is full to capacity. In the case of a brake bleeder or a clutch bleeder, this is addressed by mounting the pump and fluid reservoir on a metal frame with two wheels at the bottom for supporting and transporting the unit and a handle at the top for manipulation by an operator. Examples of this type of unit are the brake and clutch system bleeder type DF.20-100 and the adjustable-pressure electronic brake bleeder type DF.21, both of which are sold under the registered trade mark FACOM.

Brake bleeding is an operation which purges a car's or commercial vehicle's brake system of used brake fluid and replaces fresh brake fluid pumped into the brake system at a regulated pressure. New brake fluid is pumped from a fluid reservoir into the brake system's inlet. Old brake fluid flows from the brake system's outlet to be collected by a collector bottle and discarded in a collection facility. The operator can check for hydraulic system leakage during brake bleeding which is a useful benefit. The operation takes one operator about 10 to 15 minutes when using an appliance such as the aforementioned brake and clutch system bleeder type DF.20-100 or brake bleeder type DF.21. It is recommended that brake fluid in a car is replaced about once every two years or after 40,000km. As such, brake bleeding is an operation which occurs relatively frequently. It is advantageous to have an appliance which is portable and stand-alone with as much capacity and run-time as possible as this helps facilitate efficient and cost-effective use.

The type DF.20-100 appliance is portable and stand-alone. It is adapted for bleeding car and commercial vehicle brake systems and clutch systems. The pump's electric motor is energized by a 12 Volt d.c. electrical supply which is typically from a near-by car or truck battery connected by a pair of electric leads each equipped with a crocodile clip for clasping a terminal of the car battery. The pump's inlet is supplied new fluid by a five litre reservoir mounted to the appliance's frame. The reservoir has an inlet with a screw-cap and a fluid level indicator. The pump's outlet is in-line with a pressure regulator which controls the pressure of new fluid delivered by a four metre delivery hose to the brake system or clutch system. The delivery hose is equipped with a plug for connection to either a brake system or a clutch system. The type DF.21 appliance is very similar, albeit with electronic pressure control for automatically holding fluid pressure in the delivery hose at a constant pre-selected value. Both of the type DF.20-100 and the type DF.21 appliances weigh about 11 kg when their reservoir is not filled with fluid.

It is an object of the present invention to provide a portable appliance which makes improved use of the space it occupies so that it may be more versatile or have improved run-time.

Accordingly, the present invention provides a portable appliance comprising: a body for supporting the portable appliance; a handle for manipulation of the portable appliance; a pump with an inlet and an outlet; a fluid reservoir fluidly coupled to the inlet of the pump; and an electric motor for operating the pump to cause pumping of fluid from the inlet to the outlet when the motor is energized by an electrical power supply, wherein the portable appliance comprises a bay for receiving an electrical power source for electrical connection to the motor. The bay unites the appliance with its own electrical power source so that they may be portable together and avoid the inconvenience of connecting and disconnecting the appliance's motor to different electrical power sources. Advantageously, this dispenses with the need for lengthy electrical cables between the appliance and an external electrical power source which can clutter the operator's workspace. The operator need not waste time seeking an electrical power source because one is readily available in the bay. A new electrical power source may replace an old electrical power source at the end of its life or when it needs recharging. The electrical power source is a battery, preferably a rechargeable battery.

Preferably, the bay has a restraint to restrain an electrical power source received within in the bay. The restraint may be a strap or a wall around the electrical power source or a lid or a door. The restraint may help to secure the electrical power source inside the bay and avoid it accidently falling from the appliance while being moved.

Preferably, the bay has a shield to shield an electrical power source received within the bay. The shield may protect the electrical power source from damage, corrosion or unauthorised tampering.

The bay is located below the middle of the body when the portable appliance is orientated in its normal condition of operation. This helps to lower the centre of gravity of the appliance so that the appliance is easier to manipulate.

Preferably, the bay is located substantially at the bottom of the body when the portable appliance is orientated in its normal condition of operation. This helps to lower the centre of gravity of the appliance so that the appliance is less likely to topple over when accidently knocked.

The body has at least one support wheel for movably supporting the portable appliance on a surface. Support wheels allow the appliance to be more easily moved about like a cart.

The bay is integral with the body, the handle may be integral with the body and the fluid reservoir is integral with the body. This helps to economise on the number of components and reduce the overall weight and cost of the appliance. Preferably, an integral body and fluid reservoir comprises a plastic shell. This is a cost-effective means of producing a rigid and durable body which also has an internal reservoir. A plastic shell facilitates diverse options for an aesthetically appealing design of body.

Preferably, the outlet is fluidly connected to an outlet hose. The outlet hose may be fitted with a connection for delivery of pumped fluid directly to a particular system.

The bay is for receiving a vehicle battery electrically connectable to the motor. A vehicle battery is a readily available source of electrical power, typically being 12 Volts d.c., for the energizing the pump's electric motor. Vehicle batteries are often rechargeable. They are portable and sized for use in a portable appliance.

The portable appliance is a brake bleeder or a clutch bleeder.

Further features and advantages of the present invention will be understood by reference to the following description, which is given by way of example and in association with the accompanying drawings of which:
Figure 1 shows a front perspective view of a portable appliance equipped with a pump and fluid reservoir in the form of a brake bleeder;
Figure 2 shows a rear perspective view of the portable appliance of Figure 1;
Figure 3 shows a rear perspective view of the portable appliance of Figure 1 with a modified battery receiving bay;
Figure 4 shows a schematic diagram of the internal components the portable appliance of Figure 1; and
Figure 5 shows a schematic diagram of the internal components of a modified version of the portable appliance of Figure 1.

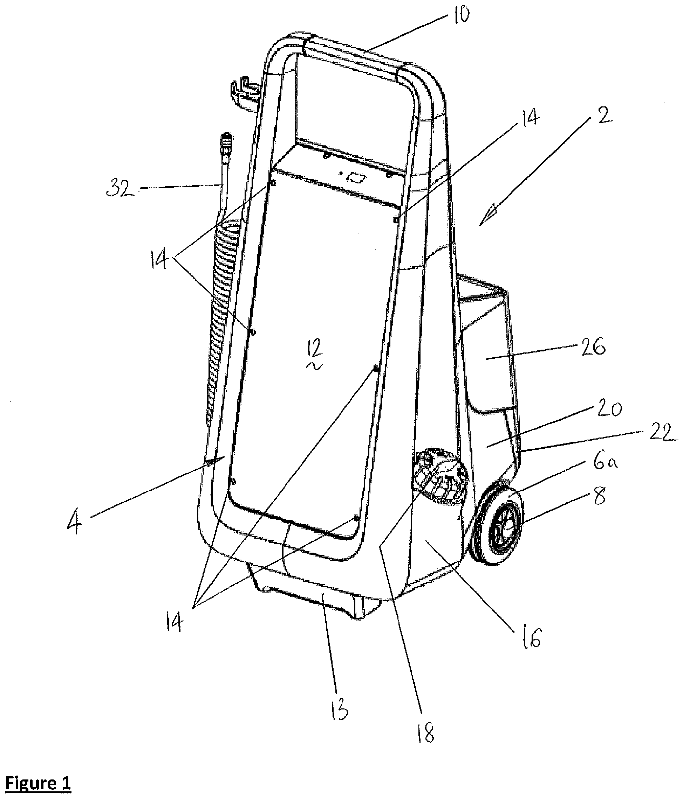

Referring to Figures 1 to 3, there is shown a portable brake bleeder appliance 2 which may also be used as a clutch bleeder. The appliance 2 comprises a body 4 for supporting the appliance on a pair of support wheels 6a, 6b freely rotatingly connected to an axle 8 located at the bottom of the body. The body is a hollow plastic shell. The plastic shell may be made from a blow-moulding process or a rotor-moulding process.

The appliance 2 comprises a handle 10 at the top of the body 4 for manipulation of the appliance, a cover plate 12 on the front of the body 4 for shielding the internal components of the appliance and a foot 13 at the bottom of the body 4 for supporting the appliance on a surface in combination with the support wheels 6a, 6b . The handle 10 and the foot 13 are integrally moulded with the body 4. The cover plate 12 is a metal sheet fastened to the body 4 by screws 14.

The appliance 2 comprises a fluid reservoir 16 for containing a new brake fluid such as DOT3, DOT4 or DOT5, or a clutch fluid. The fluid reservoir has a screw-on removable filler cap 18 for replenishing the fluid reservoir 16 with new fluid. The fluid reservoir 16 occupies the interior of the hollow plastic shell of the body 4 and has a capacity of approximately 10 litres.

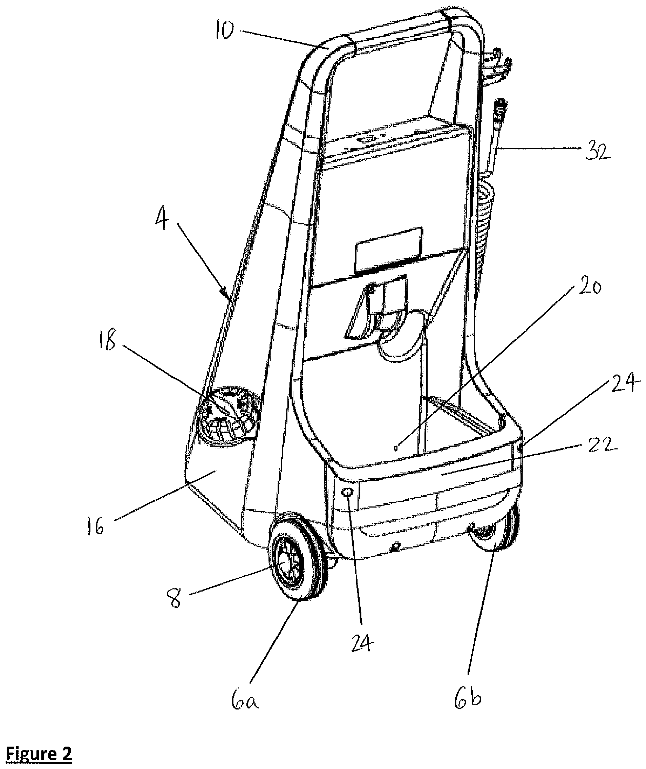

Referring in particular to Figure 2, the appliance 2 comprises a battery receiving bay 20 at the back of the body 4. The battery receiving bay 20 is sized to receive a 12 Volt d.c. rechargeable vehicle battery (not shown). The battery receiving bay 20 has a bay wall 22 to retain a vehicle battery within the confines of the battery receiving bay 20 in normal operating conditions. The battery receiving bay 20 is integral with the body 4. The bay wall 22 is fastened to the rear of the body 4 by screws 24

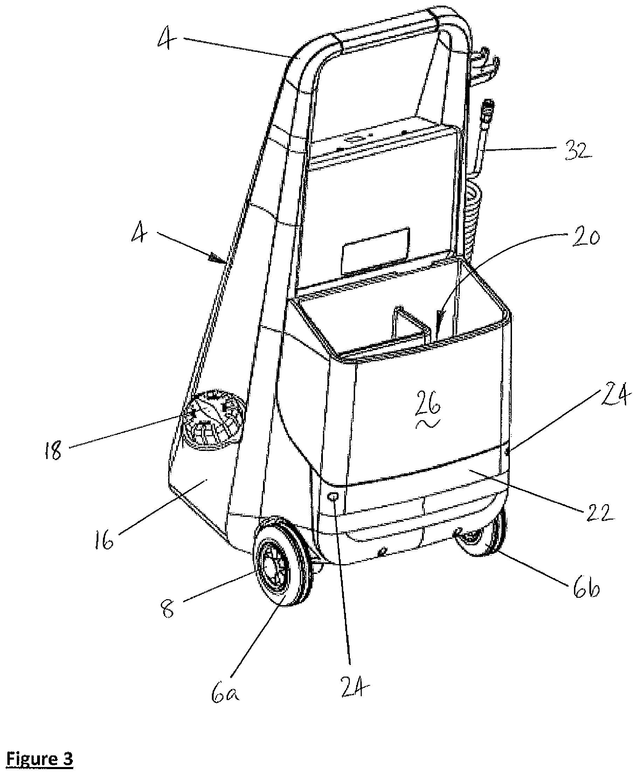

Referring in particular to Figure 3, the appliance 2 comprises a bay cover 26 removably mounted around the top of the battery receiving bay 20 to provide additional protection to a battery located therein and to provide additional storage capacity.

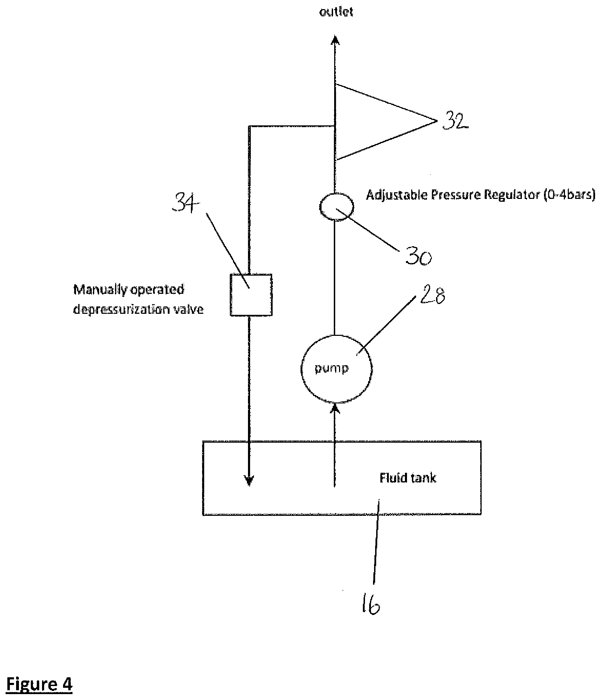

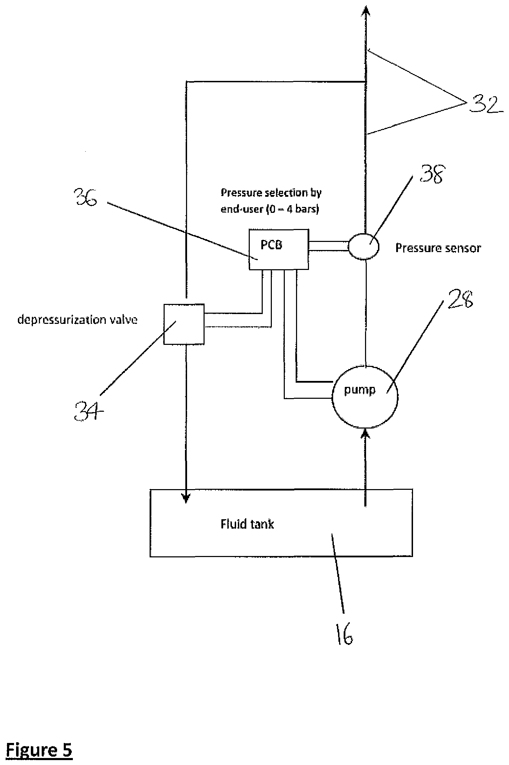

Referring to Figures 4 and 5, the internal components of the appliance 2 include a pump 28 with an inlet and an outlet. The fluid reservoir 16 is fluidly coupled to the inlet of the pump. The appliance 2 comprises an electric motor (not shown) for operating the pump 28 to cause pumping of fluid from the inlet to the outlet when the motor is energized by an electrical power supply located in the battery receiving bay 20. An adjustable pressure regulator 30 is fluidly coupled to the outlet of the pump 28 and in-line with an outlet hose 32 which delivers pressurized brake fluid from the appliance 2 to a brake system. The pressure regulator is manually adjustable to alter brake fluid pressure in the outlet hose 32 between 0 and 4 bar, although the appliance 2 can deliver higher pressures, if necessary.

The internal components of the appliance 2 include an on/off switch (not shown) between the electrical power source (the battery) and the motor for selectively energizing and de-energizing the motor. When the motor is energized, the appliance 2 purges old brake fluid from a brake system which is collected from the brake system outlet and the appliance 2 re-charges the brake system with new brake fluid.

The internal components of the appliance 2 include a manually operated depressurization valve 34 switch between the outlet hose 32 (at a location downstream of the pressure regulator 30) and the fluid reservoir 16. When the operator judges that purging and replenishing of the brake system is complete, the operator closes the brake system's outlet. The brake system is then normally over-pressurized (because the pump 28 is still running). The operator may open the depressurization valve 34 to allow depressurization of the brake system before disconnecting the outlet hose 32 of the appliance 2 from the inlet of the brake system. Surplus brake fluid returns to the fluid reservoir 16.

Referring in particular to Figure 5, a modified version of the appliance 2 comprises an electronic circuit having a printed circuit board 36 for automatically controlling the pump 28 and the depressurization valve 34 in reliance on pressure data supplied by a pressure sensor 38 (substituted for the adjustable pressure regulator 30). The operator, using the electronic circuit, pre-selects a desired brake fluid pressure in the brake system. The printed circuit board 36 monitors the brake fluid pressure in the outlet hose 32 using pressure data supplied by a pressure sensor 38 and de-energizes the motor, thereby stopping the pump 28, when the pre-selected brake fluid pressure is attained. If pre-selected brake fluid pressure is surpassed, the printed circuit board 36 automatically opens the depressurization valve 34 to reduce the brake fluid pressure to the pre-selected amount and return surplus brake fluid to the fluid reservoir 16.

## Claims

1. A portable appliance (2) wherein the portable appliance is a brake bleeder or a clutch bleeder and wherein the portable appliance comprises :
a body (4) for supporting the portable appliance wherein the body (4) has at least one support wheel (6a, 6b) for movably supporting the portable appliance (2) on a surface;
a handle (10) for manipulation of the portable appliance;
a pump (28) with an inlet and an outlet;
a fluid reservoir (16) fluidly coupled to the inlet of the pump; and
an electric motor for operating the pump to cause pumping of fluid from the inlet to the outlet when the motor is energized by an electrical power supply,
wherein the portable appliance comprises a bay (20), wherein the fluid reservoir and the bay are integral with the body, **characterised in that** the bay (20) and the majority of the fluid reservoir (16) are located below the middle of the body (4) when the portable appliance is orientated in its normal condition of operation and wherein the bay is sized for receiving a rechargeable vehicle battery for electrical connection to the motor.

2. A portable appliance as claimed in claim 1, wherein the bay has a restraint (22) to restrain a vehicle battery received within in the bay.

3. A portable appliance as claimed in either one of claims 1 or 2, wherein the bay has a shield (26) to shield a vehicle battery received within the bay.

4. A portable appliance as claimed in any one of the previous claims, wherein the bay (20) is located substantially at the bottom of the body (4) when the portable appliance (2) is orientated in its normal condition of operation.

5. A portable appliance as claimed in any one of the previous claims, wherein the handle (10) is integral with the body (4).

6. A portable appliance as claimed in any one of the previous claims, wherein the integral body (4) and fluid reservoir (16) comprises a plastic shell.

7. A portable appliance as claimed in any one of the previous claims, wherein the outlet is fluidly connected to an outlet hose (32).

## Patentansprüche

1. Tragbares Gerät (2), wobei das tragbare Gerät eine Bremsentlüftung oder eine Kupplungsentlüftung ist und wobei das tragbare Gerät umfasst:
einen Körper (4) zum Tragen des tragbaren Geräts, wobei der Körper (4) mindestens ein Stützrad (6a, 6b) zum beweglichen Tragen des tragbaren Geräts (2) auf einer Oberfläche aufweist;
einen Griff (10) zur Handhabung des tragbaren Geräts;
eine Pumpe (28) mit einem Einlass und einem Auslass;
einen Fluidspeicher (16), der fluidisch mit dem Einlass der Pumpe gekoppelt ist; und
einen Elektromotor zum Betreiben der Pumpe, um das Pumpen von Fluid vom Einlass zum Auslass zu bewirken, wenn der Motor durch eine elektrische Energieversorgung mit Strom versorgt wird,
wobei das tragbare Gerät einen Schacht (20) umfasst, wobei der Fluidspeicher und der Schacht integral mit dem Körper sind, **dadurch gekennzeichnet, dass** der Schacht (20) und der Großteil des Fluidspeichers (16) unterhalb der Mitte des Körpers (4) angeordnet sind, wenn das tragbare Gerät in seinem normalen Betriebszustand ausgerichtet ist, und wobei der Schacht für die Aufnahme einer wiederaufladbaren Fahrzeugbatterie zur elektrischen Verbindung mit dem Motor bemessen ist.

2. Tragbares Gerät nach Anspruch 1, wobei der Schacht eine Rückhalteeinrichtung (22) aufweist, um eine in dem Schacht aufgenommene Fahrzeugbatterie zurückzuhalten.

3. Tragbares Gerät nach einem der Ansprüche 1 oder 2, wobei der Schacht eine Abschirmung (26) zum Abschirmen einer in dem Schacht aufgenommenen Fahrzeugbatterie aufweist.

4. Tragbares Gerät nach einem der vorhergehenden Ansprüche, wobei der Schacht (20) im Wesentlichen am Boden des Körpers (4) angeordnet ist, wenn das tragbare Gerät (2) in seinem normalen Betriebszustand ausgerichtet ist.

5. Tragbares Gerät nach einem der vorhergehenden Ansprüche, wobei der Griff (10) mit dem Körper (4) integral ist.

6. Tragbares Gerät nach einem der vorhergehenden Ansprüche, wobei der integrale Körper (4) und Fluidspeicher (16) eine Kunststoffhülle umfassen.

7. Tragbares Gerät nach einem der vorhergehenden Ansprüche, wobei der Ausgang fluidisch mit einem Ausgangsschlauch (32) verbunden ist.

## Revendications

1. Appareil portable (2) dans lequel l'appareil portable est un purgeur de frein ou un purgeur d'embrayage et dans lequel l'appareil portable comprend :
un corps (4) pour supporter l'appareil portable dans lequel le corps (4) a au moins une roue de support (6a, 6b) pour supporter de manière mobile l'appareil portable (2) sur une surface ;
une poignée (10) pour la manipulation de l'appareil portable ;
une pompe (28) avec une entrée et une sortie ;
un réservoir de fluide (16) couplé de manière fluidique à l'entrée de la pompe ; et
un moteur électrique pour faire fonctionner la pompe pour provoquer le pompage de fluide de l'entrée à la sortie lorsque le moteur est alimenté par un bloc d'alimentation électrique,
dans lequel l'appareil portable comprend une baie (20), dans lequel le réservoir de fluide et la baie forment une seule pièce avec le corps, **caractérisé en ce que** la baie (20) et la plus grande partie du réservoir de fluide (16) sont situées en dessous du centre du corps (4) lorsque l'appareil portable est orienté dans son état de fonctionnement normal et dans lequel la baie est dimensionnée pour recevoir une batterie de véhicule rechargeable pour une connexion électrique au moteur.

2. Appareil portable selon la revendication 1, dans lequel la baie a un élément de retenue (22) pour retenir une batterie de véhicule reçue à l'intérieur de la baie.

3. Appareil portable selon l'une quelconque des revendications 1 ou 2, dans lequel la baie a un élément de protection (26) pour protéger une batterie de véhicule reçue à l'intérieur de la baie.

4. Appareil portable selon l'une quelconque des revendications précédentes, dans lequel la baie (20) est située sensiblement au fond du corps (4) lorsque l'appareil portable (2) est orienté dans son état de fonctionnement normal.

5. Appareil portable selon l'une quelconque des revendications précédentes, dans lequel la poignée (10) forme une seule pièce avec le corps (4).

6. Appareil portable selon l'une quelconque des revendications précédentes, dans lequel le corps (4) et le réservoir de fluide (16) formant une seule pièce comprennent une coque en plastique.

7. Appareil portable selon l'une quelconque des revendications précédentes, dans lequel la sortie est raccordée de manière fluidique à un tuyau de sortie (32).
